# EUROPEAN PATENT SPECIFICATION

(11) **EP 0 628 433 B1**
(45) Date of publication and mention of the grant of the patent: **28.11.2001**
(21) Application number: 93904355.0
(22) Date of filing: 26.02.1993
(51) Int. Cl.: B43L 19/00

(54) **ERASER**
RADIERGUMMI
GOMME

(30) Priority: 28.02.1992 JP 7882892; 27.08.1992 JP 25228292
(43) Date of publication of application: 14.12.1994
(73) Proprietor: PENTEL KABUSHIKI KAISHA, Chuo-kuho, Tokyo 103-8538 (JP)
(72) Inventor: TAKAHASHI, Yasuhiro, Soka-shi, Saitama 340 (JP)
(74) Representative: Lewin, John Harvey
(86) International application number: JP9300239
(87) International publication number: WO9316887

(56) References cited:
- EP-A- 0 334 075
- CA-A- 1 132 283
- FR-A- 1 315 430
- GB-A- 1 092 563
- JP-A- 1 105 799
- JP-A- 1 259 999
- JP-A- 2 041 298
- JP-A- 2 111 598
- JP-A- 56 127 498
- JP-B- 58 052 520
- US-A- 4 578 420
- Ullmann's Encyclopedia of industrial Chemistry, fifth edition, volume A23, page 300.

## Description

### Technical Field

The present invention relates to an eraser for erasing handwriting written with a pencil or a mechanical pencil. In particular, the invention relates to an eraser excellent in erasing performance even when it is applied under a weak rubbing force like a polyvinyl chloride eraser, which can be incinerated without emitting any toxic chlorine-containing gas.

### Background Art

Erasers leave refuse after being used. The base material of polyvinyl chloride erasers which have prevalently been used is polyvinyl chloride which is a compound that contains a large amount of chlorine. Therefore, when the refuse is incinerated, a toxic chlorine-containing gas is emitted to cause air pollution. On the contrary, thermoplastic elastomer erasers are very favorable, because they do not contain any chlorine compound and hence are free from the above problem. Among them, styrenic and olefinic elastomers are particularly suitable for use as the material of erasers, since they highly adsorb carbon powder constituting handwriting written with a pencil or a mechanical pencil to exhibit an excellent erasing performance.

However, when the styrenic or olefinic thermoplastic elastomer is used singly, it will not be abraded even when rubbed strongly, since it has a high breaking strength and thus it does not function as an eraser. Therefore, it is combined with a factice or resin usually incorporated into rubber-base erasers or with another thermoplastic elastomer to function as an eraser easy to be abraded.

However, even when the breaking strength of the eraser as a whole is lowered by the combination with the above-described substance to abrade it by rubbing, the breaking strength of the styrenic or olefinic thermoplastic elastomer per se is not lowered. Therefore, erasers comprising the styrenic or olefinic thermoplastic elastomer as the base material have a problem that the erasing performance under a weak rubbing force is far inferior to that of the polyvinyl chloride eraser.

US-A-4 578 420 discloses an eraser composition composed of conventional fillers and additives wherein the binder is a styrene-butadiene-styrene block polymer having a butadiene portion of 10 to 40 percent. In some cases, the composition includes polybutadiene, aliphatic hydrocarbon and polynorbornene. The polynorbornene is present in a relatively high proportion based on the polybutadiene and/or aliphatic hydrocarbon.

DE-A-3 005 298 discloses an eraser in which the base material is a styrene-isoprene-styrene block copolymer. The composition may also include polybutadiene, naphthenic oil and polynorbornene.

EP-A-0 334 075 discloses an eraser in which the base material is a styrene-butylene or propylene-styrene block copolymer.

### Disclosure of Invention

An object of the present invention is to provide an eraser excellent in erasing performance even when used under a weak rubbing force, which comprises a styrenic thermoplastic elastomer as the base material.

The present invention provides an eraser comprising a styrenic thermoplastic elastomer as a base material, the styrenic thermoplastic elastomer being a triblock copolymer having molecule-constraining components for preventing plastic deformation and an elastic rubber component in the molecule, and having a structure in which the rubber component is sandwiched between the molecule-constraining components; from 1 to 3 parts by weight per part by weight of the base material, of an oily matter; and from 0.1 to 10% by weight, based on the oily matter, of a gelling agent.

### Best Mode for Carrying out the Invention

A detailed description on the present invention will now be made hereinbelow.

At the outset, a description will be made on the first embodiment of the present invention relating to an eraser which comprises a styrenic thermoplastic elastomer as the base material, an oily matter and a gelling agent.

The styrenic thermoplastic elastomer to be used as the base material is a triblock copolymer having molecule-constraining components (hard segments) for preventing plastic deformation and an elastic rubber component (soft segment) in the molecule, and having a structure in which the rubber component is sandwiched between the molecule-constraining components. At an ambient temperature, two or more molecule-constraining components at both ends of the molecule gather to form a domain to thereby yield a three-dimensional network structure like a crosslinked rubber. At a high temperature, the domain comprising the molecule-constraining components is plasticized to lose the power of constraining the molecule. Therefore, the styrenic thermoplastic elastomer exhibits the properties of a vulcanized rubber at the ambient temperature and is plasticized at a high temperature so that it can be molded on an ordinary plastic molding machine.

The styrenic thermoplastic elastomers include a styrene/ butadiene/styrene copolymer wherein the molecule-constraining component is polystyrene (the same applied hereinbelow) and the rubber component is polybutadiene; a styrene/isoprene/styrene copolymer wherein the rubber component is polyisoprene; a styrene/ethylenebutylene/ styrene copolymer wherein the rubber component is polyethylenebutylene; and a styrene/ethylenepropylene/ styrene copolymer wherein the rubber component is polyethylenepropylene.

Examples of commercially available styrenic thermoplastic elastomers will be given below. The styrene/butadiene/ styrene copolymers include Tufprene A, Tufprene 125, 200, 315 and 912, Solprene T-406, T-411, T-414 and T-475, Asaprene T-420, T-430, T-431 and T-450 (products of Asahi Chemical Industry Co., Ltd.); and Cariflex TR1101, TR1102, TRKX138S, TR1118, TR1116, TR1184, TR1186, TR1122, TR4113, TR4122, TR4205, TR4260 and TR4261 and Kraton D1300 (products of Shell Kagaku K.K.). The styrene/isoprene/styrene copolymers include Cariflex TR1107, TR1111, TR1112 and TR1117 (products of Shell Kagaku K.K.). The styrene/ ethylenebutylene/styrene copolymers include Tuftec H1052, H1041 and H1051 (products of Asahi Chemical Industry Co., Ltd.); Kraton G1650, G1652 and G1657X (products of Shell Kagaku K.K.); and Rabalon SJ4400, SJ5400, SJ6400, SJ7400, SJ8400, SJ9400, SE5400, SE6400, SS6400, SS7400, SS9400, MJ4300, MJ6300 and ME6301(products of Mitsubishi Petrochemical Co., Ltd.). The styrene/ethylenepropylene/ styrene copolymers include Septon 2002, 2003, 2023, 2043, 2063, 2005, 2006, 2103, 2104, 2105 and 4055 (products of Kuraray Co., Ltd.). Solprene T-475 contains 50 parts by weight of a naphthenic oil per 100 parts by weight of the styrene/butadiene/styrene copolymer. These styrenic thermoplastic elastomers may be used either singly or in combination of two or more of them.

It is also possible to lower the breaking strength of the styrenic thermoplastic elastomer by using a diblock copolymer which is a kind of the styrenic thermoplastic elastomer and which comprises a molecule-constraining component and a rubber component in combination with the above-described styrenic thermoplastic elastomer comprising the triblock copolymer as the base material. Examples of the diblock copolymers include Kraton G1726X (a product of Shell Kagaku K.K.) comprising 70% by weight of styrene/ ethylenebutylene diblock copolymer and 30% by weight of styrene/ethylenebutylene/styrene triblock copolymer and Kraton G1701X (a product of Shell Kagaku K.K.) which is styrene/ethylenepropylene diblock copolymer; and Septon 1001 and 1050 (products of Kuraray Co., Ltd.). When the diblock copolymer is used in combination, the amount thereof is desirably not larger than 30% by weight based on the whole styrenic thermoplastic elastomer. This is because when the amount of the diblock copolymer is larger than 30% by weight, the styrenic thermoplastic elastomer is apt to be plasticized or brought to a solution state at ambient temperature by an oily matter which will be described below.

The oily matter is used for reducing the breaking strength of the styrenic thermoplastic elastomer used as the base material. The oily matters include petroleum oils and liquid polymers.

The petroleum oils include paraffinic oils, naphthenic oils and aromatic oils derived from petroleums, and mixtures of them. Examples of known petroleum oils include not only extender oils for oil rubbers and process oils for compound, but also liquid paraffins, spindle oils and machine oils. The liquid paraffins include industrial liquid paraffins according to JIS K 2231 and those standardized by The Pharmacopoeia of Japan and Food Hygiene Law. Examples of those meeting the standards include Crystol 52, 70, 72, 102, 142, 172, 202, 262, 322 and 352 (products of Esso Sekiyu K.K.); and DN. Oil CP15N, CP32N, CP38N, CP68N, KP8, KP15, KP32, KP68 and KP100 (products of Idemitsu Kosan Co., Ltd.).

The petroleum oils can be classified according to Kurtz's classification into paraffinic oils wherein the number of carbon atoms in the paraffin chain accounts for at least 50% of the total number of the carbon atoms, napthenic oils wherein the number of carbon atoms in the naphthene ring accounts for 30 to 45%, and aromatic oils wherein the number of carbon atoms in the aromatic ring accounts for at least 35%. The paraffinic oils include DIANA PX-32, PX-90, PW-32, PW-90, PW-380, PS-32, PS-90 and PS-430 (products of Idemitsu Kosan Co., Ltd.); and Shellflex 210, 310, 790, 1210 and 1310, Lubeflex 26, 100 and 460 (products of Shell Kagaku K.K.); Kyoseki Process P200, P300, P500 and Kyoseki EPT750 (products of Kyodo Oil Co., Ltd.). The naphthenic oils include DIANA NS-24, NS-100, NM-26, NM-280, NP-24, NU-80 and NF-90 (products of Idemitsu Kosan Co., Ltd.); Shellflex 371JY, 371N, 451, N-40, 22, 22R, 32R, 100R, 100S, 100SA, 220RS, 220S, 260, 320R and 680 (products of Shell Kagaku K.K.); and Kyoseki Process R25, R50, R200 and R1000 (products of Kyodo Oil Co., Ltd.). The aromatic oils include DIANA AC-12, AC-460, AH-16 and AH-58 (products of Idemitsu Kosan Co., Ltd.); Dutrex 729UK and 739 (products of Shell Kagaku K.K.); and Kyoseki Process X50 and X140 (products of Kyodo Oil Co., Ltd.).

Among the above-described petroleum oils, the paraffinic and naphthenic oils may be used either singly or in the form of a mixture of two or more of them, but the aromatic oils must be used in combination with the paraffinic oil and/or naphthenic oil. This is because when the number of carbon atoms in the aromatic rings accounts for 35% or above of the total number of the carbon atoms in the petroleum oil, the styrene domain in the styrenic thermoplastic elastomer is dissolved because of a high solubility of the polystyrene in the aromatic ring component, and the styrenic thermoplastic elastomer is plasticized or brought to a solution state at room temperature to make the production of the eraser impossible. Therefore, the number of the aromatic carbon atoms in the petroleum oils must be below 35% of the total number of the carbon atoms.

The liquid polymers include liquid polyisoprenes, liquid polybutadienes and liquid polybutenes. The liquid polybutenes include Nisseki Polybutene LV-5, LV-10, LV-25, LV-50, LV-100 and HV-15 (products of Nippon Petrochenical Co., Ltd.); and Idemitsu Polybutene 0H, 5H, 10H, 15H, OR and 15R (products of Idemitsu Petrochemical Co., Ltd.).

The oily matter must be used in an amount of 1 to 3 parts by weight per part by weight of the styrenic thermoplastic elastomer. When the amount thereof is smaller, the lowering of the breaking strength is insufficient and no satisfactory erasing performance can be achieved when the eraser is used under a weak rubbing force. On the contrary, when the amount of the oily matter is larger, the breaking strength of the elastomer is too low to achieve the erasing performance.

The gelling agent is used for inhibiting the so-called blooming wherein the oily matter oozes out to the eraser surface and also for preventing the hand or paper surface from staining at the time of using the eraser. The gelling agents usable herein include organic gelling agents such as dibenzylidenesorbitol, tribenzylindenesorbitol, dextrin/ fatty acid esters, N-acyl fatty acid amides and castor oil derivatives; and inorganic gelling agents such as silica, bentonite and hectorite. Since silica has a particularly remarkable effect, it is preferred. The silica is, for example, Aerosil (a product of Nippon Aerosil Co., Ltd.) produced by the dry method, or Mizukasil (a product of Mizusawa Industrial Chemicals, Ltd.) or Nipsil (a product of Nippon Silica Industrial Co., Ltd.) produced by the wet method.

The gelling agent is used in an amount of 0.1 to 10% by weight based on the oily matter. When the amount thereof is below this range, the remarkable effect is not always obtained and, on the contrary, when it is abcve this range, an adverse effect tends to be exerted on other properties of the eraser.

If necessary, chlorine-free thermoplastic resins other than the styrenic thermoplastic elastomers, and olefinic, ester and urethane thermoplastic elastomers can be used in addition to the above-described indispensable components. The amount of the styrenic thermoplastic elastomer is at least 25% by weight, preferably at least 50% by weight, based on the whole base material. Further, additives ordinarily contained in eraser, such as a filler, stabilizer, colorant and antifungal and antimicrobial agent are suitably usable. The fillers include calcium carbonate, magnesium carbonate, diatomaceous earth, clay, and fibrous or needle-like fillers for improving the bending strength, such as potassium titanate fibers, magnesium sulfate fibers, silicon nitride whiskers and silicon carbide whiskers. The stabilizers include antioxidants such as hindered phenols, ultraviolet absorbers such as benzotriazoles and oxalic acid anilides, and ultraviolet stabilizers such as hindered amines. The colorants include organic and inorganic pigments. The antifungal and antimicrobial agents include 2-(4-thiazolyl)-benzimidazole, zinc 2-pyridinethiol-1-oxide, metallic silver supported by calcium phosphate carrier and zinc antimicrobial agents.

The eraser can be produced by kneading the above-described components on an ordinary heating-type mixer such as a heating two-roller mill, pressure kneader or Banbury mixer and then molding the resultant blend on a molding machine such as a pressing machine, injection-molding machine or extruder.

The eraser of the present invention exhibits an excellent erasing performance even when it is used under a weak rubbing force, since the oily matter contained therein in an amount of 1 to 3 parts by weight per part by weight of the base material reduces the breaking strength of the styrenic thermoplastic elastomer used as the base material. Further, the oily matter does not ooze out to the eraser surface, since the gelling agent fixes the oily matter in the eraser by gelling. In addition, the blooming-inhibiting effect of the gelling agent is far superior to that of the fillers such as calcium carbonate and, therefore, only a small amount of the gelling agent will suffice for exhibiting its effect. Thus, the properties of the eraser are not so deteriorated as compared with the case of inhibiting the blooming with the filler.

The following Examples will further illustrate the present invention.

### Example 1

| Styrenic thermoplastic elastomers: | |
|---|---|
| "Cariflex TR1101" | 35 parts by weight |
| "Kraton G1726X" | 15 parts by weight |
| paraffinic oil "DIANA PW-380" | 60 parts by weight |
| filler: heavy calcium carbonate stabilizer | 100 parts by weight |
| "IRGANOX 1010" (CIBA-GEIGY Limited, Germany) | 1 part by weight |
| gelling agent: fine silica powder "Aerosil #200" (Nippon Aerosil Co., Ltd.) | 0.6 part by weight |

Among the above-mentioned components, the two kinds of styrenic thermoplastic elastomers were thoroughly kneaded on a two-roller mill heated to 120°C. A gel previously prepared by mixing the paraffinic oil and the gelling agent, and the other components were added to the resultant mixture, and the mixture thus obtained was further kneaded. After the completion of the kneading, the obtained mixture was fed into a mold and pressed at 120°C for 10 min. to obtain a block-shaped eraser.

### Example 2

| Styrenic thermoplastic elastomers: | |
|---|---|
| "Septon 2002" | 50 parts by weight |
| "Asaprene T-430" | 100 parts by weight |
| naphthenic oil "DIANA NS-24" | 300 parts by weight |
| filler: heavy calcium carbonate | 200 parts by weight |
| stabilizer "IRGANOX 1010" | 1 part by weight |
| gelling agent: fine silica powder "Nipsil LP" (Nippon Silica Industrial Co., Ltd.) | 9 parts by weight |

Among the above-mentioned components, the two kinds of styrenic thermoplastic elastomers were thoroughly kneaded on a two-roller mill heated to 120°C. A gel previously prepared by mixing the naphthenic oil and the gelling agent, and the other components were added to the resultant mixture, and the mixture thus obtained was further kneaded. After the completion of the kneading, the obtained mixture was fed into a mold and pressed at 120°C for 10 min. to obtain a block-shaped eraser.

### Example 3

| Styrenic thermoplastic elastomer: | |
|---|---|
| "Solprene T-475" (mixture of 50 parts by weight of triblock copolymer and 25 parts by weight of naphthenic oil) | 75 parts by weight |
| Olefinic thermoplastic elastomer "Milastomer 7030N" | 50 parts by weight |
| filler: heavy calcium carbonate | 100 parts by weight |
| naphthenic oil "DIANA NU-80" | 50 parts by weight |
| Stabilizer "IRGANOX 1010" | 1 part by weight |
| gelling agent: dibenzylidenesorbitol "GELALL D" (New Japan Chemical Co., Ltd.) | 0.5 part by weight |

Among the above-mentioned components, the two kinds of thermoplastic elastomers were thoroughly kneaded on a two-roller mill heated to 120°C. A gel previously prepared by mixing the naphthenic oil and the gelling agent under heating to once obtain a solution and then cooling it, and the other components were added to the resultant mixture, and the mixture thus obtained was further kneaded. After the completion of the kneading, the obtained mixture was fed into a mold and pressed at 120°C for 10 min. to obtain a block-shaped eraser.

### Example 4

| Styrenic thermoplastic elastomers: | |
|---|---|
| "Cariflex TR1101" | 35 parts by weight |
| "Kraton G1726X" | 15 parts by weight |
| liquid polymer: "Nisseki Polybutene LV-50" | 60 parts by weight |
| filler: heavy calcium carbonate | 100 parts by weight |
| stabilizer "IRGANOX 1010" | 1 part by weight |
| gelling agent: dextrin palmitate "Rheopearl KE" (Sansho Co., Ltd.) | 0.3 part by weight |

Among the above-mentioned components, the two kinds of styrenic thermoplastic elastomers were thoroughly kneaded on a two-roller mill heated to 120°C. A gel previously prepared by mixing the liquid polymer and the gelling agent under heating to obtain a solution and then cooling it, and the other components were added to the resultant mixture, and the mixture thus obtained was further kneaded. After the completion of the kneading, the obtained mixture was fed into a mold and pressed at 120°C for 10 min. to obtain a block-shaped eraser.

### Example 5

| Styrenic thermoplastic elastomer: | |
|---|---|
| "Septon 2002" | 50 parts by weight |
| liquid polymer: "Nisseki | 100 parts by weight |
| Polybutene HV-15" | |
| filler: heavy calcium carbonate | 200 parts by weight |
| stabilizer "IRGANOX 1010" | 1 part by weight |
| gelling agent: bentonite liquid paraffin | 5 parts by weight |
| "DN. Oil KP32" (Idemitsu Kosan Co., Ltd.) | 36 parts by weight |

Among the above-mentioned components, the styrenic thermoplastic elastomer and liquid paraffin were thoroughly kneaded on a two-roller mill heated to 120°C. A gel previously prepared by mixing the liquid polymer and the gelling agent, and the other components were added to the resultant mixture, and the mixture thus obtained was further kneaded. After the completion of the kneading, the obtained mixture was fed into a mold and pressed at 120°C for 10 min. to obtain a block-shaped eraser.

### Example 6

| Styrenic thermoplastic elastomer: | |
|---|---|
| "Solprene T-406" | 50 parts by weight |
| olefinic thermoplastic elastomer "Milastomer 7030N" | 50 parts by weight |
| filler: heavy calcium carbonate | 100 parts by weight |
| liquid polymer "Idemitsu Polybutene OR" | 75 parts by weight |
| stabilizer "IRGANOX 1010" | 1 part by weight |
| gelling agent: "Aerosil #200" | 1.5 parts by weight |

Among the above-mentioned components, the two kinds of thermoplastic elastomers were thoroughly kneaded on a two-roller mill heated to 120°C. A gel previously prepared by mixing the liquid polymer and the gelling agent, and the other components were added to the resultant mixture, and the mixture thus obtained was further kneaded. After the completion of the kneading, the obtained mixture was fed into a mold and pressed at 120°C for 10 min. to obtain a block-shaped eraser.

| Comparative Example 1 [comparison with Example 1] | |
|---|---|
| Styrenic thermoplastic elastomers: | |
| "Cariflex TR1101" | 35 parts by weight |
| "Kraton G1726X" | 15 parts by weight |
| paraffinic oil "DIANA PW-380" | 175 parts by weight |
| filler: heavy calcium carbonate | 100 parts by weight |
| stabilizer "IRGANOX 1010" | 1 part by weight |

Among the above-mentioned components, the two kinds of styrenic thermoplastic elastomers were thoroughly kneaded on a two-roller mill heated to 120°C. The other components were added to the resultant mixture, and the mixture thus obtained was further kneaded. After the completion of the kneading, the obtained mixture was fed into a mold and pressed at 120°C for 10 min. to obtain a block-shaped eraser.

| Comparative Example 2 [comparison with Example 1] | |
|---|---|
| Styrenic thermoplastic elastomers: | |
| "Cariflex TR1101" | 35 parts by weight |
| "Kraton G1726X" | 15 parts by weight |
| paraffinic oil "DIANA PW-380" | 175 parts by weight |
| filler: heavy calcium carbonate | 350 parts by weight |
| stabilizer "IRGANOX 1010" | 1 part by weight |

Among the above-mentioned components, the two kinds of styrenic thermoplastic elastomers were thoroughly kneaded on a two-roller mill heated to 120°C. Then the same procedure as that of Comparative Example 1 was repeated to obtain an eraser.

| Comparative Example 3 [conventional polyvinyl chloride eraser] | |
|---|---|
| Polyvinyl chloride resin: | |
| "ZEON 121" (NIPPON ZEON Co., Ltd.) | 30 parts by weight |
| plasticizer: dioctyl phthalate | 35 parts by weight |
| stabilizer: epoxidized soybean oil | 0.6 part by weight |
| filler: heavy calcium carbonate | 35 parts by weight |

The above-mentioned components were mixed together to obtain a paste, which was fed into a mold and pressed at 110°C for 20 min. to obtain a conventional polyvinyl chloride eraser.

Examples 1 through 6 relate to the eraser of the present invention. Comparative Examples 1 and 2 are given for the comparison therewith. Comparative Example 3 relates to the conventional polyvinyl chloride eraser.

The rate of erasure was determined according to JIS S 6050 with each of the erasers obtained in Examples 1 to 6 and Comparative Examples 1, 2 and 3. The rate of erasure of each of the erasers obtained in Examples 1 to 6 was at least 80%, which satisfied the JIS specification.

Then the erasing performance achieved by applying each of the erasers obtained in Examples 1 to 6 with a hand under a weak rubbing force was compared with that of the conventional polyvinyl chloride eraser obtained in Comparative Example 3 to find that they were equal.

After the erasers were kept in a sealed vessel for 3 months, no blooming phenomenon occurred and the erasing performance was not deteriorated in the erasers obtained in Examples 1 to 6, while the blooming phenomenon occurred in the gelling-agent-free eraser obtained in Comparative Example 1 to stain the paper surface and the user's hand. When the eraser obtained in Comparative Example 2 was used, the colorant in the handwriting could not be incorporated into the refuse of the eraser, and the paper surface was stained black, though the blooming phenomenon did not occur, since a large amount of the filler was incorporated in place of the gelling agent in order to inhibit the blooming phenomenon.

As described above in detail, the eraser of the present invention can be incinerated without emitting any toxic chlorine-containing gas, since no chlorine-containing compound is used as the starting material and, in addition, it is excellent in erasing performance even when applied under a weak rubbing force like the conventional polyvinyl chloride eraser.

## Claims

1. An eraser comprising a styrenic thermoplastic elastomer as a base material, the styrenic thermoplastic elastomer being a triblock copolymer having molecule-constraining components for preventing plastic deformation and an elastic rubber component in the molecule, and having a structure in which the rubber component is sandwiched between the molecule-constraining components; from 1 to 3 parts by weight, per part by weight of the base material, of an oily matter; and from 0.1 to 10% by weight, based on the oily matter, of a gelling agent.

2. The eraser according to Claim 1, wherein the styrenic thermoplastic elastomer is one or a mixture of two or more triblock copolymers selected from among styrene/butadiene/styrene copolymer, styrene/isoprene/styrene copolymer, styrene/ethylenebutylene/styrene copolymer and styrene/ethylenepropylene/sytrene copolymer.

3. The eraser according to Claim 1 or 2, wherein the oily matter is petroleum oil.

4. The eraser according to Claim 3, wherein the petroleum oil is one or a mixture of two or more oils selected from among liquid paraffin, paraffinic oils and naphthenic oils.

5. The eraser according to Claim 1 or 2, wherein the oily matte is a liquid polymer.

6. The eraser according to Claim 5, wherein the liquid polymer is one or a mixture of two or more oils selected from among liquid polyisoprene, liquid polybutadiene and liquid polybutene.

7. The eraser according to any of Claims 1 to 6, wherein the gelling agent is an organic one.

8. The eraser according to Claim 7, wherein the organic gelling agent is one or a mixture of two or more gelling agents selected from among dibenzyldenesorbitol, tribenzylidenesorbitol and dextrin/fatty acid esters.

9. The eraser according to any of Claims 1 to 6, wherein the gelling agent is an inorganic one.

10. The eraser according to Claim 9, wherein the inorganic gelling agent is one or a mixture of two or more gelling agents selected from among silica and bentonite.

11. The eraser according to any of Claims 1 to 10, which further contains a styrenic thermoplastic elastomer comprising a diblock copolymer as the base material.

## Patentansprüche

1. Radiergummi umfassend ein Styrolthermoplastelastomer als Basismaterial, wobei das Styrolthermoplastelastomer ein Triblockcopolymer mit molekülhindernden Komponenten ist, um plastische Deformation zu verhindern, und mit einer elastischen Kautschukkomponente im Molekül, und mit einer Struktur, in der die Kautschukkomponente sandwichartig zwischen den molekülhinderr den Komponenten angeordnet ist; 1 bis 3 Gewichtsteile, pro Gewichtsteil Basismaterial, einer öligen Substanz; und 0,1 bis 10 Gewichts-%, bezogen auf die ölige Substanz, eines Geliermittels.

2. Radiergummi nach Anspruch 1, worin das Styrolthermoplastelastomer eines oder eine Mischung aus zwei oder mehreren Triblockcopolymeren ist au sgewählt aus Styrol/Butadien/Styrolcopolymer, Styrol/Isopren/Styrolcopolymer, Styrol/Ethylenbutylen/Styrolcopolymer und Styrol/Ethylenpropylen/Styrolcopolymer.

3. Radiergummi nach Anspruch 1 oder 2, worin die ölige Substanz Mineralöl ist.

4. Radiergummi nach Anspruch 3, worin das Mineralöl eines oder eine Mischung aus zwei oder mehreren Ölen ist ausgewählt aus flüssigem Paraffin, Paraffinölen und Naphthenölen.

5. Radiergummi nach Anspruch 1 oder 2, worin die ölige Substanz ein flüssiges Polymer ist.

6. Radiergummi nach Anspruch 5, worin das flüssige Polymer eines oder eine Mischung aus zwei oder mehreren Ölen ist ausgewählt aus flüssigem Polyisopren, flüssigem Polybutadien und flüssigem Polybuten.

7. Radiergummi nach einem der Ansprüche 1 bis 6, worin das Geliermittel eine organische Substanz ist.

8. Radiergummi nach Anspruch 7, worin das organische Geliermittel eines oder eine Mischung aus zwei oder mehreren Geliermitteln ist ausgewählt aus Dibenzylidensorbit, Tribenzylidensorbit und Dextrin/Fettsäureestern.

9. Radiergummi nach einem der Ansprüche 1 bis 6, worin das Geliermittel eine anorganische Substanz ist.

10. Radiergummi nach Anspruch 9, worin das anorganische Geliermittel eines oder eine Mischung aus Geliermitteln ist ausgewählt aus Siliciumoxid und Bentonit.

11. Radiergummi nach einem der Ansprüche 1 bis 10, das ferner ein Styrolthermoplastelastomer enthält, das ein Diblockcopolymer als Basismaterial aufweist.

## Revendications

1. Gomme comprenant un élastomère thermoplastique styrénique comme matériau de base, l'élastomère thermoplastique styrénique étant un copolymère tribloc ayant des composants de contrainte de molécule pour prévenir la déformation plastique et un composant de caoutchouc élastique, et ayant une structure dans laquelle le composant caoutchouc est pris en sandwich entre les composants de contrainte de molécule ; entre 1 et 3 parts massiques, par part massique du matériau de base, d'une substance huileuse ; et entre 0,1 et 10 % massiques, par rapport à la substance huileuse, d'un gélifiant.

2. Gomme selon la revendication 1, dans laquelle l'élastomère thermoplastique styrénique est un ou un mélange de deux ou plusieurs copolymères triblocs choisis parmi le copolymère styrène butadiène styrène, le copolymère styrène isoprène styrène, le copolymère styrène éthylènebutylène styrène et le copolymère styrène éthylènepropylène styrène.

3. Gomme selon la revendication 1 ou 2, dans laquelle la substance huileuse est l'huile de pétrole.

4. Gomme selon la revendication 3, dans laquelle l'huile de pétrole est une huile ou un mélange de deux ou plusieurs huiles choisies parmi la paraffine liquide, les huiles paraffiniques ou les huiles naphténiques.

5. Gomme selon la revendication 1 ou 2, dans laquelle la substance huileuse est un polymère liquide.

6. Gomme selon la revendication 5, dans laquelle le polymère liquide est une huile ou un mélange de deux ou plusieurs huiles choisies parmi le polyisoprène liquide, le polybutadiène liquide et le polybutène liquide.

7. Gomme selon l'une quelconque des revendications 1 à 6, dans laquelle le gélifiant est un gélifiant organique.

8. Gomme selon la revendication 7, dans laquelle le gélifiant organique est un gélifiant ou un mélange de deux ou plusieurs gélifiants choisis parmi le dibenzylidène sorbitol, le tribenzylidène sorbitol et la dextrine / les esters d'acide gras.

9. Gomme selon l'une quelconque des revendications 1 à 6, dans laquelle le gélifiant est un gélifiant inorganique.

10. Gomme selon la revendication 9, dans laquelle le gélifiant inorganique est un gélifiant ou un mélange de plusieurs gélifiants choisis parmi la silice et la bentonite.

11. Gomme selon l'une quelconque des revendications 1 à 10, qui contient en sus un élastomère thermoplastique styrénique comprenant un copolymère dibloc comme matériau de base.
